# FASCICULE DE BREVET EUROPEEN

(11) **EP 2 544 798 B1**
(45) Date de publication et mention de la délivrance du brevet: **04.04.2018**
(21) Numéro de dépôt: 11712612.8
(22) Date de dépôt: 21.02.2011
(51) Int. Cl.: B01D 53/94, F01N 3/20, C01C 1/00

(54) **CARTOUCHE DE STOCKAGE D'UN REDUCTEUR GAZEUX POUR LA REDUCTION CATALYTIQUE SELECTIVE DES OXYDES D'AZOTE**
VORRICHTUNG ZUR LAGERUNG EINES GASREDUKTIONSMITTELS FÜR DIE SELEKTIVE KATALYTISCHE REDUKTION VON STICKSTOFFOXIDEN
CARTRIDGE FOR STORING A GAS REDUCING AGENT FOR THE SELECTIVE CATALYTIC REDUCTION OF NITROGEN OXIDES

(30) Priorité: 12.03.2010 FR 1051774
(43) Date de publication de la demande: 16.01.2013
(73) Titulaire: PSA Automobiles SA, 78300 Poissy (FR)
(72) Inventeur: CHEVALIER, Philippe, F-92500 Rueil-Malmaison (FR); CHARIAL, Christophe, F-78000 Versailles (FR)
(74) Mandataire: Laurin, Ghislain Nicolas
(86) Numéro de dépôt international: PCT/FR2011/050356
(87) Numéro de publication internationale: WO 2011/110765

(56) Documents cités:
- EP-A2- 1 092 466
- DE-A1- 10 323 591
- JP-A- 2 258 017
- US-A- 5 809 775
- US-A1- 2001 053 342
- US-A1- 2005 274 108
- US-A1- 2009 280 047

## Description

L'invention porte sur le domaine de la dépollution des gaz d'échappement d'un moteur à combustion. Plus précisément, elle porte sur la réduction des oxydes d'azote contenus dans les gaz d'échappement d'un moteur à combustion, par réduction catalytique sélective (ou SCR, selon l'acronyme anglophone pour « sélective catalytic reduction »)

La technologie de réduction des oxydes d'azote par réduction catalytique sélective consiste à réduire les oxydes d'azote avant leur sortie du circuit d'échappement d'un moteur à combustion, à l'aide d'un agent réducteur (ou d'un précurseur d'agent réducteur) introduit dans la ligne d'échappement.

Dans la suite du présent document, on emploiera indifféremment le terme de réducteur pour désigner l'agent réducteur ou un précurseur de l'agent réducteur.

Il est par ailleurs connu de stocker l'agent réducteur, par exemple de l'ammoniac gazeux, dans un matériau solide capable de l'adsorber ou de l'absorber. A titre d'exemple, le document PCT WO2006081824 divulgue une substance apte à assurer un tel stockage sous forme « solide ». US 2001/0053342 divulgue une cartouche avec un matériau de stockage d'un réducteur, l'ammoniaque, adsorbé sur ce matériau. US 2005/0274108 concerne une cartouche où l'ammoniaque est stockée comme carbonate d'ammonium.

Le réducteur peut être stocké dans une poudre compacte solide placée dans une cartouche adéquate. Afin de relâcher le réducteur, il est nécessaire de placer le matériau de stockage dans des conditions de température et de pression favorables. Typiquement, il est nécessaire de le chauffer.

Il paraît difficilement envisageable d'embarquer sur un véhicule la quantité de réducteur requise pour l'ensemble de sa durée de vie. Il est donc nécessaire de pouvoir assurer une maintenance du dispositif. Or, dans le cadre d'un mode de stockage du réducteur par absorption ou adsorption par un solide ou un solide pulvérisé, contenu dans une cartouche, le remplissage en réducteur des cartouches n'est évidemment pas aussi aisé que dans le cadre d'un réducteur sous forme liquide, par exemple une solution d'urée.

Le remplacement d'une cartouche « vide »par une nouvelle cartouche « pleine » est une solution envisagée pour assurer la maintenance du système. Néanmoins, une telle solution a un coût important.

Par ailleurs, il serait envisageable de réintroduire du réducteur dans une cartouche vide de NH3 (où seul le sel resterait). Cependant, il n'est pas actuellement connu de moyen d'assurer une densité de stockage de réducteur aussi importante dans un matériau de stockage déjà employé que lors de sa première utilisation. Le fait de réintroduire du réducteur dans un matériau de stockage déjà utilisé contraindrait donc soit à raccourcir les intervalles de maintenance après le premier entretien, soit à surdimensionner les cartouches de sorte à toujours assurer un même intervalle de maintenance, en proposant des cartouches non saturées en réducteur à neuf. Cette dernière solution est pénalisante en termes de masse et de volume d'implantation, qui sont des paramètres très contraints notamment dans un cadre d'application automobile.

L'invention tend à résoudre ces problèmes par l'adoption de cartouches de stockage de réducteur optimisées.

Plus précisément, l'invention porte sur une cartouche de stockage de réducteur gazeux pour la réduction catalytique sélective des oxydes d'azote telle que définie à la revendication 1, entre autres, une enveloppe contenant un matériau de stockage, apte au stockage par absorption ou adsorption du réducteur, l'enveloppe comportant un moyen d'ouverture et de fermeture permettant le remplacement du matériau de stockage. La cartouche est ainsi réutilisable, ce qui réduit les coûts de maintenance et améliore la recyclabilité des éléments mis en jeu. Le remplacement du matériau de stockage permet de bénéficier d'une densité de stockage de réducteur maximale après chaque maintenance, ce qui limite le volume d'implantation à prévoir assurer le stockage de la quantité de réducteur nécessaire entre deux maintenances du système.

Selon l'invention, l'enveloppe est essentiellement constituée de deux demi-coquilles et le moyen d'ouverture et de fermeture consiste en un moyen d'assemblage permettant leur démontage et leur remontage. Le mode d'ouverture ainsi réalisé permet le remplacement aisé du matériau de stockage. En outre, la cartouche présente une constitution simple, aisément industrialisable.

Selon diverses variantes de l'invention, le moyen d'assemblage est choisi parmi : un pas de vis correspondant sur chacune des demi-coquille, un système quart de tour, une bague de sertissage d'une demi-coquille sur l'autre, un ou plusieurs clips. Ces moyens permettent un démontage non destructif et un remontage de la cartouche.

De préférence, le matériau de stockage est un solide ou un solide pulvérisé.

De préférence, le matériau de stockage est un sel choisi parmi : CaCl₂, SrCl₂, FeCl₂, MgCl₂ , NiCl₂. Ces sels sont particulièrement bien adaptés au stockage de NH₃ gazeux, et offrent une bonne densité de stockage. Parmi ces sels, on notera que le SrCl₂ est particulièrement bien adapté à l'application industrielle de l'invention.

De préférence, le matériau de stockage se présente sous la forme d'un pain conformé au volume interne de la cartouche. L'emploi d'un matériau sous forme de pain en simplifie l'échange. Sa forme est telle qu'elle limite le volume mort dans la cartouche.

Selon l'invention, le moyen d'ouverture est conformé pour n'être actionnable que par un outillage spécifique. Ainsi, on évite que l'utilisateur ne puisse aisément démonter une cartouche et se trouver en contact avec le matériau de stockage. Les outillages spécifiques dépendent évidemment du mode de fermeture de la variante de l'invention considérée.

Selon l'invention, la cartouche comporte en outre un dispositif de protection, qui maintient le matériau de stockage dans la cartouche lorsque l'enveloppe n'est pas ouverte à l'aide de l'outil spécifique. Ce dispositif de protection évite de mettre en contact l'utilisateur avec le matériau de stockage en cas d'ouverture de la cartouche. Bien évidemment, selon le moyen d'ouverture mis en jeu, divers moyens de protection sont envisageables : opercule, diaphragme, etc.

Dans une variante de l'invention le dispositif de protection est un opercule mis en place et bloqué lors de la fermeture de la cartouche. Ainsi, lors de la réouverture de la cartouche sans outillage spécialisé, l'opercule bloqué reste en place. Il faut alors sciemment extraire l'opercule pour accéder au matériau de stockage.

Dans une autre variante de l'invention, le dispositif de protection est un diaphragme se fermant en l'absence d'une des demi-coquilles. Typiquement, le diaphragme peut être constitué de lamelles mobiles, qui se referment spontanément (sous l'effet d'un ressort ou par leur nature élastique) lorsque la cartouche est ouverte. Le diaphragme s'ouvre lorsque la cartouche est refermée. Typiquement, un bouchon de fermeture ou une demi-coquille peut être doté d'un appendice interne en forme de cône, qui ouvre le diaphragme lors de la fermeture de la cartouche.

De préférence, la cartouche est dotée de moyens de chauffage électriques du matériau de stockage. En effet, le matériau de stockage est chauffé pour entraîner la désorption du réducteur. Des moyens de chauffage intégrés à la cartouche simplifient la mise en oeuvre de ce mode de stockage. Le chauffage peut être interne ou externe à la cartouche.

De préférence, l'enveloppe de la cartouche présente une forme sensiblement cylindrique. Il est proposé des formes cylindriques afin de favoriser la tenue à la pression cyclée et pour faciliter le processus de remplissage des cartouches. Par ailleurs la forme cylindrique permet, dans une variante de l'invention munie de moyens de chauffage électriques, de minimiser l'apport électrique extérieur pour apporter la puissance thermique nécessaire à la désorption du réducteur gazeux (dans une application automobile classique, on limitera avantageusement la puissance électrique à fournir à 250 watts environ). Les demi-coquilles fermant le cylindre peuvent présenter diverses formes, par exemple une forme de demi-sphère, ou coniques, ou encore présenter une surface plane reliée au cylindre par un rayon de courbure ou un chanfrein.

De préférence, l'enveloppe de la cartouche présente de préférence un diamètre compris entre 80mm et 250mm et une longueur comprise entre de 100mm et 800mm, et un volume interne compris entre 1 et 5 litres. Les cartouches sont dimensionnées de sorte que le volume de réducteur stockable par l'ensemble des cartouches implantées permette une autonomie suffisante pour assurer le fonctionnement du système de catalyse SCR entre deux maintenances programmées du moteur équipé d'un tel dispositif. Par ailleurs, dans le cadre d'un réchauffage par des moyens électriques de chauffage des cartouches, les cartouches sont dimensionnées de sorte à être suffisamment petites pour présenter une inertie thermique assez faible pour que les moyens de chauffage permettent une désorption rapide du réducteur consécutivement à un démarrage à froid du moteur à combustion équipé. Typiquement, pour une application automobile, on peut estimer qu'il faut que la désorption débute au plus 200 secondes environ après un démarrage à froid.

De préférence, l'enveloppe de la cartouche est en acier inoxydable. Ce choix permet la constitution d'une cartouche relativement économique, résistante à la pression malgré une faible épaisseur de paroi, ce qui limite en outre son encombrement extérieur, par exemple par rapport à une cartouche en aluminium présentant un même volume de stockage.

Suivant d'autres variantes de l'invention, la cartouche intègre en outre au moins un dispositif parmi : un filtre qui évite le passage de matériau de stockage vers l'extérieur de la cartouche, un dispositif de dosage du réducteur, un clapet anti-retour, un embout de connexion, un dispositif d'étanchéité des connexions.

L'invention est décrite plus en détail ci-après et en référence aux figures représentant schématiquement le système dans lequel une cartouche selon l'invention est applicable, et des exemples de réalisation des cartouches.
La figure 1 présente schématiquement un dispositif de stockage de réducteur SCR présentant deux cartouches conformes à l'invention.
La figure 2 présente schématiquement et en transparence une cartouche selon un premier mode de réalisation de l'invention.
La figure 3 présente schématiquement et en transparence une cartouche selon un second mode de réalisation de l'invention.

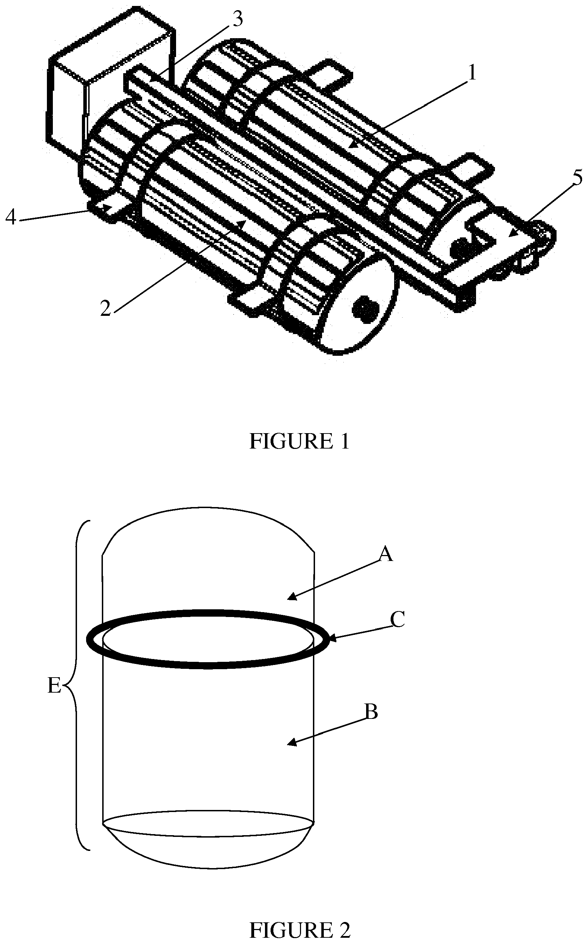

Dans la variante de l'invention représentée en figure 1, on utilise 2 cartouches identiques, tant dans leur volume de stockage que dans leur constitution. Cela permet une réduction des coûts de production et des coûts logistiques associés. Une première cartouche 1 et une seconde cartouche 2 sont montés sur un support 3 adapté, à l'aide de moyens de retenue, permettant préférentiellement un échange aisé de chaque cartouche, indépendamment les unes des autres. Dans la variante de l'invention ici représentée, les moyens de retenue comportent des moyens de fixation rapide 4 sous la forme de colliers de serrage adaptés à la géométrie extérieure des cartouches, et liés rigidement à un élément de structure 31 du support 3.

Les cartouches présentent dans cette variante de l'invention une forme sensiblement cylindrique fermée par deux demi-coquilles, qui est adaptée au stockage sous pression du réducteur. Il est proposé des formes cylindriques afin de favoriser la tenue à la pression cyclée et pour faciliter le processus de remplissage des cartouches. Le réducteur, à savoir l'agent réducteur de réduction catalytique sélective des oxydes d'azote ou un précurseur d'un tel réducteur, peut conformément à l'art antérieur connu être stocké sous forme gazeuse dans une poudre compacte solide (ou tout autre corps/état de la matière permettant de le réaliser) et être relâché sous l'effet d'un chauffage adéquat.

Par ailleurs la forme cylindrique permet, dans une variante de l'invention munie de moyens de chauffage électriques, de minimiser l'apport électrique extérieur pour apporter la puissance thermique nécessaire à la désorption du réducteur gazeux. Les demi-coquilles fermant le cylindre peuvent présenter diverses formes, par exemple une forme de demi-sphère, ou coniques, ou encore présenter une surface plane reliée au cylindre par un rayon de courbure ou un chanfrein.

Dans certaines variantes de l'invention, non représentées, les cartouches peuvent présenter des géométries sensiblement différentes les unes par rapport aux autres, notamment pour répondre à des contraintes d'implantation dans un véhicule automobile, mais présentent néanmoins des volumes sensiblement identiques.

Les cartouches sont dimensionnées de sorte que le volume de réducteur stockable par l'ensemble des cartouches permette une autonomie suffisante pour assurer le fonctionnement du système de catalyse SCR entre deux maintenances programmées du moteur équipé d'un tel dispositif. Par ailleurs, dans le cadre d'un réchauffage par des moyens électriques de chauffage des cartouches, les cartouches sont dimensionnées de sorte à être suffisamment petites pour présenter une inertie thermique assez faible pour que les moyens de chauffage permettent une désorption rapide du réducteur consécutivement à un démarrage à froid du moteur à combustion équipé.

Typiquement, pour une application automobile, on peut estimer qu'il faut que la désorption débute au plus en 800 secondes environ après un démarrage sous 20°C si la cartouche est pleine. Pour arriver à ce résultat, en fonction de la puissance des moyens de chauffage employés, l'inventeur a constaté que des cartouches sensiblement cylindriques présentant un diamètre compris entre 80mm et 250mm et une longueur de 100mm à 800mm peuvent représenter un bon compromis.

La figure 2 présente schématiquement une telle cartouche. La cartouche ici représentée présente une enveloppe E de forme cylindrique, fermée à ses extrémités par un embout courbe, et composée de deux demi-coquilles, une première demi-coquille A et une seconde demi-coquille B. Les demi-coquilles n'ont pas nécessairement des longueurs équivalentes, et, notamment dans l'exemple ici représenté la première demi-coquille A constitue simplement l'embout de l'enveloppe E.

Dans le mode de réalisation ici représenté, la première demi-coquille A est sertie sur la seconde demi-coquille B, pour former l'enveloppe E. Le sertissage met en jeu dans cette variante de l'invention une bague C spécifique, ainsi, l'enveloppe de la coquille peut être ouverte à l'aide d'outils adaptés, afin de remplacer le matériau de stockage de réducteur contenu dans l'enveloppe E.

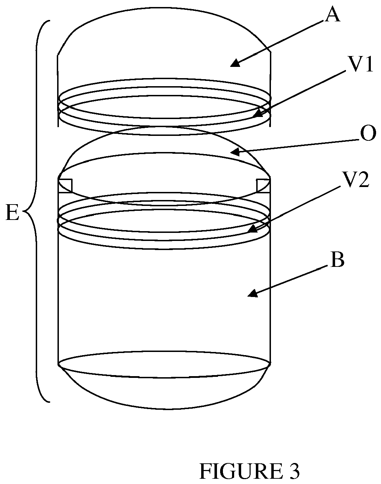

La figure 3 présente une cartouche présentant une enveloppe E de forme analogue à celle de la cartouche représentée en figure 2. Dans cette variante de l'invention, la première demi-coquille A présente un premier pas de vis V1 compatible d'un second pas de vis V2 de la seconde demi-coquille B. Les demi-coquilles sont ainsi assemblées par vissage, afin de former l'enveloppe E. Selon l'invention, non spécifiquement représentée ici, les demi-coquilles ne sont pas aisément dévissables à la main. Leur démontage requiert l'emploi d'un outil spécifique, tel qu'une clé à sangle, ou une clé complémentaire d'une cannelure spécifique réalisée en surface d'une demi-coquille.

Dans d'autres variantes de l'invention non représentées, les demi-coquilles peuvent être fixées l'une à l'autre par d'autres moyens bien connus permettant la réouverture et la fermeture de l'enveloppe : clips, système « quart de tour », etc.

Selon l'invention, la cartouche est dotée d'un dispositif de protection permettant, lorsque la cartouche n'est pas ouverte à l'aide d'un outil adapté, de maintenir dans le matériau de stockage à l'intérieur de la cartouche.

La figure 3 présente un tel dispositif sous la forme d'un opercule O. L'opercule O est, avant montage de la cartouche, contenu à l'intérieur de la première demi-coquille A. Lorsque cette dernière est vissée à la seconde demi-coquille B, l'opercule O se met en place et se bloque au sommet de la seconde demi-coquille B. Ainsi, lors d'un dévissage de la cartouche, l'opercule O reste en place, et maintient tout le matériau de stockage à l'intérieur de la seconde demi-coquille B.

D'autre dispositifs de protection (non représentés) sont évidemment envisageable, parmi lesquels : un clapet à ressort, un diaphragme composé de lames, une structure déformable en silicone, etc.

La cartouche peut également intégrer un système de filtre, de dosage, de clapet anti-retour, ou d'étanchéité des connexions sur le circuit de réducteur.

Notamment dans le cadre d'une application automobile, la maintenance après vente consiste alors à retirer les cartouches dont le réducteur est désorbé en totalité ou partiellement du matériau de stockage, et à les remplacer par des cartouches pleines de réducteur (c'est-à-dire dont le matériau de stockage contient la quantité nominale prévue de réducteur). La cartouche « vide » est transportée dans une usine pour y être rechargée en réducteur, par échange du matériau de stockage. Elle est alors ouverte à l'aide de l'outil adapté permettant de vider le matériau de stockage qu'elle contient et de le remplacer par un matériau de stockage chargé de réducteur.

L'invention propose une cartouche de réducteur offrant de nombreux avantages. Une cartouche selon l'invention offre un moyen fiable, simple et efficace de stockage d'un réducteur pour la réduction catalytique sélective des oxydes d'azote. D'une part, elle permet un l'adoption d'un processus optimisé de gestion des recharges de réducteur, au travers d'une filière adaptée. Par le remplacement du matériau de stockage de la cartouche, elle permet de limiter le volume de stockage nécessaire pour assurer l'autonomie souhaitée entre deux maintenances (car, lors d'un changement de cartouche, la densité de stockage de réducteur du matériau est toujours maximale). Par ailleurs, elle améliore le caractère recyclable des éléments mis en jeu. Selon la variante de l'invention mise en jeu, la cartouche offre une bonne tenue à la pression et une bonne efficacité énergétique en désorption du réducteur, notamment par l'adoption d'une forme sensiblement cylindrique.

## Revendications

1. Cartouche (1,2) de stockage de réducteur gazeux pour réduction catalytique sélective des oxydes d'azote, comportant une enveloppe (E) contenant un matériau de stockage apte au stockage par absorption ou adsorption du réducteur, dans laquelle l'enveloppe (E) comporte un moyen d'ouverture et de fermeture (V1,V2,C) permettant le remplacement du matériau de stockage, **caractérisée en ce que** :
- l'enveloppe (E) est essentiellement constituée de deux demi coquilles (A,B) ; et
- le moyen d'ouverture et de fermeture consiste en un moyen d'assemblage permettant leur démontage et leur remontage, ledit moyen d'ouverture étant conformé pour n'être actionnable que par un outillage spécifique ; et
- la cartouche comporte en outre un dispositif de protection (O), qui maintient le matériau de stockage dans la cartouche lorsque l'enveloppe n'est pas ouverte à l'aide de l'outil spécifique.

2. Cartouche selon la revendication 1, **caractérisé en ce que** le moyen d'assemblage est choisi parmi : un pas de vis (V1,V2) correspondant sur chacune des demi-coquille, un système quart de tour, une bague de sertissage (C) d'une demi-coquille sur l'autre, un ou plusieurs clips.

3. Cartouche selon l'une quelconque des revendications précédentes, **caractérisée en ce que** le matériau de stockage est un solide ou un solide pulvérisé.

4. Cartouche selon la revendication 3 **caractérisée en ce que** le matériau de stockage est un sel choisi parmi : CaCl₂, SrCl₂, FeCl₂, MgCl₂, NiCl₂.

5. Cartouche selon l'une quelconque des revendications précédentes, **caractérisée en ce que** le matériau de stockage se présente sous la forme d'un pain conformé au volume interne de la cartouche.

6. Cartouche selon l'une des revendications précédentes, **caractérisé en ce que** le dispositif de protection est un opercule (O) mis en place et bloqué lors de la fermeture de la cartouche.

7. Cartouche selon l'une des revendications précédentes, **caractérisé en ce que** le dispositif de protection est un diaphragme se fermant lorsque la cartouche est ouverte.

8. Cartouche selon l'une quelconque des revendications précédentes, **caractérisé en ce qu'**elle est dotée de moyens de chauffage électriques du matériau de stockage.

9. Cartouche selon l'une quelconque des revendications précédentes, **caractérisée en ce que** son enveloppe (E) présente une forme sensiblement cylindrique.

10. Cartouche selon la revendication 9, **caractérisée en ce que** l'enveloppe présente un diamètre compris entre 80mm et 250mm et une longueur comprise entre de 100mm et 800mm, et un volume interne compris entre 1 et 5 litres.

11. Cartouche selon l'une quelconque des revendications précédentes, **caractérisée en ce que** son enveloppe (E) est en acier inoxydable.

12. Cartouche selon l'une quelconque des revendications précédentes, **caractérisée en ce qu'**elle intègre en outre au moins un dispositif parmi : un filtre qui évite le passage de matériau de stockage vers l'extérieur de la cartouche, un dispositif de dosage du réducteur, un clapet anti-retour, un embout de connexion, un dispositif d'étanchéité des connexions.

## Patentansprüche

1. Speicherkartusche (1, 2) für Gasreduktionsmittel zur selektiven katalytischen Reduktion der Stickoxide, umfassend eine Hülle (E), die ein Speichermaterial enthält, welches zur Speicherung durch Absorption oder Adsorption des Reduktionsmittels geeignet ist, wobei die Hülle (E) ein Mittel zum Öffnen und zum Schließen (V1, V2, C) umfasst, das das Auswechseln des Speichermaterials ermöglicht, **dadurch gekennzeichnet, dass**:
- die Hülle (E) im Wesentlichen aus zwei Halbschalen (A, B) gebildet ist; und
- das Mittel zum Öffnen und zum Schließen in einem Verbindungsmittel besteht, das ihr Auseinanderbauen und ihr Wiederzusammenbauen ermöglicht, wobei das Mittel zum Öffnen so ausgeformt ist, dass es nur mit einem speziellen Werkzeug betätigt werden kann; und
- die Kartusche weiter eine Schutzvorrichtung (O) umfasst, die das Speichermaterial in der Kartusche hält, wenn die Hülle nicht mithilfe des speziellen Werkzeugs geöffnet wird.

2. Kartusche nach Anspruch 1, **dadurch gekennzeichnet, dass** das Verbindungsmittel ausgewählt ist aus: einem entsprechenden Gewinde (V1, V2) an jeder der Halbschalen, einem Vierteldrehungssystem, einem Ring zum Quetschen (C) von einer Halbschale auf die andere, einer oder mehreren Klammern.

3. Kartusche nach einem der vorstehenden Ansprüche, **dadurch gekennzeichnet, dass** das Speichermaterial ein Feststoff oder ein pulverisierter Feststoff ist.

4. Kartusche nach Anspruch 3, **dadurch gekennzeichnet, dass** das Speichermaterial ein Salz ist, ausgewählt aus: CaCl₂, SrCl₂, FeCl₂, MgCl₂, NiCl₂.

5. Kartusche nach einem der vorstehenden Ansprüche, **dadurch gekennzeichnet, dass** sich das Speichermaterial in der Form eines Laibes präsentiert, der nach dem Innenvolumen der Kartusche ausgeformt ist.

6. Kartusche nach einem der vorstehenden Ansprüche, **dadurch gekennzeichnet, dass** die Schutzvorrichtung (O) ein Deckel ist, der beim Schließen der Kartusche eingesetzt und verblockt wird.

7. Kartusche nach einem der vorstehenden Ansprüche, **dadurch gekennzeichnet, dass** die Schutzvorrichtung eine Membran ist, die sich schließt, wenn die Kartusche geöffnet wird.

8. Kartusche nach einem der vorstehenden Ansprüche, **dadurch gekennzeichnet, dass** sie mit elektrischen Mitteln zum Heizen des Speichermaterials ausgestattet ist.

9. Kartusche nach einem der vorstehenden Ansprüche, **dadurch gekennzeichnet, dass** ihre Hülle (E) eine im Wesentlichen zylindrische Form aufweist.

10. Kartusche nach Anspruch 9, **dadurch gekennzeichnet, dass** die Hülle einen Durchmesser im Bereich zwischen 80 mm und 250 mm und eine Länge im Bereich zwischen 100 mm und 800 mm und ein Innenvolumen im Bereich zwischen 1 und 5 Liter aufweist.

11. Kartusche nach einem der vorstehenden Ansprüche, **dadurch gekennzeichnet, dass** ihre Hülle (E) aus Edelstahl ist.

12. Kartusche nach einem der vorstehenden Ansprüche, **dadurch gekennzeichnet, dass** sie weiter mindestens eine Vorrichtung beinhaltet aus: einem Filter, der den Austritt von Speichermaterial nach außerhalb der Kartusche verhindert, einer Dosiervorrichtung des Reduktionsmittels, einer Rückschlagklappe, einem Anschlussstück, einer Dichtvorrichtung der Anschlüsse.

## Claims

1. Cartridge (1, 2) for storing a gaseous reducing agent for selective catalytic reduction of nitrogen oxides, comprising a casing (E) containing a storage material suitable for the storage of the reducing agent by absorption or adsorption, wherein the casing (E) comprises an opening and closing means (V1, V2, C) enabling the storage material to be replaced, **characterised in that**:
- the casing (E) consists essentially of two half-shells (A, B); and
- the opening and closing means consists of an assembly means enabling them to be dismantled and reassembled, said opening means being conformed so as to be able to be actuated only by a specific tool; and
- the cartridge further comprises a protection device (O), that keeps the storage material in the cartridge when the casing is not opened by means of the specific tool.

2. Cartridge according to claim 1, **characterised in that** the assembly means is chosen from: a corresponding screw thread (V1, V2) on each of the half-shells, a quarter-turn system, a ring (C) for crimping one half-shell on the other, or one or more clips.

3. Cartridge according to any of the preceding claims, **characterised in that** the storage material is a solid or a sprayed solid.

4. Cartridge according to claim 3, **characterised in that** the storage material is a salt chosen from: CaCl₂, SrCl₂, FeCl₂, MgCl₂, NiCl₂.

5. Cartridge according to any of the preceding claims, **characterised in that** the storage material is in the form of a cake conformed to the internal volume of the cartridge.

6. Cartridge according to any of the preceding claims, **characterised in that** the protection device is a cap (O) placed and locked when the cartridge is closed.

7. Cartridge according to any of the preceding claims, **characterised in that** the protection device is a diaphragm closing when the cartridge is open.

8. Cartridge according to any of the preceding claims, **characterised in that** it is provided with means for the electric heating of the storage material.

9. Cartridge according to any of the preceding claims, **characterised in that** its casing (E) has a substantially cylindrical shape.

10. Cartridge according to claim 9, **characterised in that** the casing has a diameter of between 80mm and 250mm and a length of between 100mm and 800mm, and an internal volume of between 1 and 5 litres.

11. Cartridge according to any of the preceding claims, **characterised in that** its casing (E) is made from stainless steel.

12. Cartridge according to any of the preceding claims, **characterised in that** it further includes at least one device from: a filter that prevents the passage of storage material to the outside of the cartridge, a device for metering the reducing agent, a non-return valve, a connecting piece and a device for sealing the connections.
